# EUROPEAN PATENT APPLICATION

(11) **EP 4 044 584 A1**
(43) Date of publication of application: **17.08.2022**
(21) Application number: 20883200.6
(22) Date of filing: 29.10.2020
(51) Int. Cl.: H04N 5/262

(54) **PANORAMIC VIDEO GENERATION METHOD, VIDEO ACQUISITION METHOD, AND RELATED APPARATUSES**

(30) Priority: 31.10.2019 CN 201911054357
(71) Applicant: Huawei Technologies Co., Ltd., Longgang District, Shenzhen, Guangdong 518129 (CN)
(72) Inventor: MA, Li, Shenzhen, Guangdong 518129 (CN); ZHE, Xiaoqiang, Shenzhen, Guangdong 518129 (CN); SU, Min, Shenzhen, Guangdong 518129 (CN)
(74) Representative: Isarpatent
(86) International application number: PCT/CN2020/124929
(87) International publication number: WO 2021/083293

(57) **Abstract**

A panoramic video generation method, a video collection method, and a related apparatus are disclosed, to improve quality of a video stream in uplink transmission, so as to improve user experience of viewing a live broadcast. A platform configured to generate a panoramic video receives a first video stream that is sent by each of a plurality of video collection ends deployed on a shooting site and that is compressed by using a first compression rate; and decompresses the first video streams, and determines a region of interest on the shooting site based on the plurality of decompressed first video streams. Then, the platform notifies at least one first video collection end that is capable of collecting the region of interest to compress collected video streams by using a second compression rate less than the first compression rate, to improve quality of the video streams of the region of interest. After receiving second video streams that are separately sent by the at least one first video collection end and that are compressed by using the second compression rate, the platform decompresses the second video streams, and generates a first panoramic video based on the plurality of decompressed second video streams.

## Description

This application claims priority to Chinese Patent Application No. 201911054357.7, filed with the China National Intellectual Property Administration on October 31, 2019, and entitled "PANORAMIC VIDEO GENERATION METHOD, VIDEO COLLECTION METHOD, AND RELATED APPARATUS", which is incorporated herein by reference in its entirety.

### TECHNICAL FIELD

This application relates to the field of video processing technologies, and in particular, to a panoramic video generation method, a video collection method, and a related apparatus.

### BACKGROUND

In a conventional live broadcast technology, a single image collection device collects video streams, and uploads the video streams to a social platform. Then, a user views a video on the social platform.

With rapid development of live broadcast technologies, a live broadcast of a panoramic virtual reality (virtual reality, VR) video, for example, a panoramic VR live broadcast of a concert or a ball match, emerges. The panoramic VR live broadcast can improve viewing experience of the user, and bring immersive experience to the user.

Currently, a live broadcast process of the panoramic VR video mainly includes the following steps: A plurality of cameras are deployed on a shooting site. The cameras may collect video streams at different angles on the shooting site, and perform uplink transmission of the collected video streams to a VR content generation platform. The VR content generation platform splices a plurality of video streams, to obtain a panoramic VR video. The user views the panoramic VR video by using a VR helmet.

In an existing mechanism, limited by uplink transmission bandwidth of a wireless network, before uplink transmission of the plurality of video streams, the video streams need to be compressed by using a relatively

### SUMMARY

This application is intended to provide a panoramic video generation method, a video collection method, and a related apparatus, to improve quality of a video stream in uplink transmission, so as to improve user experience of viewing a live broadcast.

The foregoing objective and another objective are achieved by using features in the independent claims. Further implementations are embodied in the dependent claims, the specification, and the accompanying drawings.

According to a first aspect, a panoramic video generation method is provided, and is applied to a platform capable of generating a panoramic video. The platform may be a computer device such as a server or a terminal. The method includes: The platform receives a first video stream that is sent by each of a plurality of video collection ends deployed on a shooting site and that is compressed by using a first compression rate; decompresses, based on the first compression rate, the first video stream sent by each video collection end, and determines a region of interest on the shooting site based on the plurality of decompressed first video streams; separately sends a first instruction to at least one first video collection end that is capable of collecting the region of interest in the plurality of video collection ends, where the first instruction is used to indicate the first video collection end to compress collected video streams by using a second compression rate, and the second compression rate is less than the first compression rate; receives second video streams that are separately sent by the at least one first video collection end and that are compressed by using the second compression rate; and decompresses, based on the second compression rate, the second video streams separately sent by the at least one first video collection end, and generates a first panoramic video based on a plurality of decompressed second video streams.

It may be understood that, after determining, based on the first video stream sent by each video collection end, the region of interest on the shooting scenario, the platform may indicate a video collection end corresponding to the region of interest to compress video streams by using a relatively low compression rate and perform uplink transmission of the video streams, to ensure video quality in the region of interest as much as possible and improve viewing experience.

In a possible design, the platform may further receive second video streams that are compressed by using the first compression rate and that are separately sent by at least one second video collection end other than the at least one first video collection end in the plurality of video collection ends. In this way, the platform may decompress, based on the first compression rate, the second video streams separately sent by the at least one second video collection end, decompress, based on the second compression rate, the second video streams separately sent by the at least one first video collection end, and generate the first panoramic video based on the plurality of decompressed second video streams.

It should be noted that, in this embodiment of this application, after determining, based on the first video stream sent by each video collection end, the region of interest on the shooting scenario, the platform may indicate a video collection end corresponding to the region of interest to compress video streams by using a relatively low compression rate and perform uplink transmission of the video streams, and indicate a video collection end corresponding to a region of non-interest to compress video streams by using a relatively high compression rate and perform uplink transmission of the video streams. In this way, video quality in the region of interest is ensured as much as possible, and viewing experience is improved. In addition, uplink transmission bandwidth is saved.

In a possible design, after determining the region of interest on the shooting site based on the plurality of decompressed first video streams, the platform may further send a second instruction to another video collection end that is in the plurality of video collection ends and that is other than at least one first video collection capable of collecting the region of interest, where the second instruction is used to indicate the another video collection end to stop collecting a video stream or stop sending a video stream to the platform.

It should be noted that, in this embodiment of this application, after determining, based on the first video stream sent by each video collection end, the region of interest on the shooting scenario, the platform may indicate a video collection end corresponding to the region of interest to compress video streams by using a relatively low compression rate and perform uplink transmission of the video streams, and indicate a video collection end corresponding to a region of non-interest to stop collecting a video stream or stop uplink transmission of a video stream. In this way, video quality in the region of interest may be ensured as much as possible, and viewing experience may be improved. In addition, uplink transmission bandwidth may also be saved.

In a possible design, the region of interest may be a preset shooting region on the shooting site. For example, when the shooting site is a live concert, the preset shooting region may be a region in which a stage is located; or when the shooting site is a live football match, the preset shooting region may be a region in which a football field is located. Alternatively, the region of interest may be a region selected from the video streams, where the region is the region of interest. It may be understood that, examples of only two manners of determining the region of interest are provided above, and another manner of determining the region of interest may also be used.

In a possible design, the platform may further identify key content in the plurality of decompressed second video streams, where the key content may include one or more objects in the second video streams; determine, based on the key content, additional content related to the key content; and add the additional content to the first panoramic video, to obtain a second panoramic video.

In this embodiment of this application, the platform may further add the additional content to the panoramic video, and the additional content may be content related to the key content in the video streams. For example, the video streams are a ball match video, and the key content is a ball star. In this case, the additional content may be content related to the ball star, for example, an introduction, to improve the viewing experience of the user.

In a possible design, the additional content may be one or more frames of images that are related to the key content and that are in the plurality of decompressed second video streams, or content that is associated with the key content and that is outside the plurality of decompressed second video streams.

For example, when the video streams are a ball match video, the key content is, for example, a ball star. In this case, the additional content may be content related to the ball star, for example, a video snapshot of a goal of the ball star in the video streams or an introduction to the ball star; for another example, may be clothing or a football brand related to the ball star. Therefore, adding the additional content to the panoramic video can enrich the panoramic video.

In a possible design, the determining, based on the key content, additional content related to the key content includes: sending a content request to a third-party content source, where the content request carries attribute information used to describe the additional content or carries the key content, and the attribute information of the additional content is determined based on the key content; and receiving the additional content sent by the third-party content source.

It should be noted that the platform may request the additional content, for example, the clothing and football brand related to the ball star, from the third content source. Therefore, the platform adds the additional content to the panoramic video, to enrich the panoramic video.

According to a second aspect, a video collection method is further provided. The method includes: A video collection end deployed on a shooting site receives a first instruction, where the first instruction is used to indicate the video collection end to compress a collected video stream by using a first compression rate. The video collection end collects a first video stream, and compresses the first video stream by using the first compression rate.

The video collection end sends the compressed first video stream to a platform configured to generate a panoramic video. The video collection end receives a second instruction sent by the platform, where the second instruction is used to indicate the video collection end to compress the collected video stream by using a second compression rate, and the second compression rate is less than the first compression rate. The video collection end collects a second video stream, and compresses the second video stream by using the second compression rate. The video collection end sends the compressed second video stream to the platform.

Correspondingly, a video collection method is further provided. The method includes: A video collection end deployed on a shooting site receives a first instruction, where the first instruction is used to indicate the video collection end to compress a collected video stream by using a first compression rate. The video collection end collects a first video stream, and compresses the first video stream by using the first compression rate. The video collection end sends the compressed first video stream to a platform configured to generate a panoramic video. The video collection end receives a third instruction sent by the platform, where the third instruction is used to indicate the video collection end to continue compressing a collected video stream by using the first compression rate. The video collection end collects a second video stream, and compresses the second video stream by using the first compression rate. The video collection end sends the compressed second video stream to the platform.

Correspondingly, a video collection method is further provided. The method includes: A video collection end deployed on a shooting site receives a first instruction, where the first instruction is used to indicate the video collection end to compress a collected video stream by using a first compression rate. The video collection end collects a first video stream, and compresses the first video stream by using the first compression rate. The video collection end sends the compressed first video stream to a platform configured to generate a panoramic video. The video collection end receives a fourth instruction sent by the platform, where the fourth instruction is used to indicate the video collection end to stop collecting a video stream or stop sending a video stream to the platform. The video collection end stops, based on the fourth instruction, collecting the video stream or stops sending the video stream to the platform.

It may be understood that, to shoot the shooting site (for example, a live concert or a live football match) at various angles, video collection ends may be separately deployed at different locations of the shooting site. Some video collection ends can collect a region of interest (for example, a stage or a football field). Therefore, the video collection ends that can collect the region of interest may compress video streams by using a relatively low compression rate and perform uplink transmission of the video streams, to ensure video quality. A video collection end that cannot collect the region of interest may continue performing compression by using a relatively high compression rate (for example, the first compression rate) and perform uplink transmission, or may stop collecting a video stream or stop uplink transmission of a video stream, to save uplink transmission bandwidth.

In a possible design, a quantity of frames of images included in the first video stream collected by each video collection end is less than a threshold.

It may be understood that, as described above, the platform determines the region of interest by using the first video stream. A scenario in an image can be usually identified by using one frame of image or a few frames of image, and whether the shooting site is, for example, the live concert or the live football match, is determined, to determine the region of interest (for example, the stage or the football field) on the shooting site. Therefore, to improve efficiency, the first video stream may be a relatively short video stream.

According to a third aspect, a panoramic video generation apparatus is further provided. The apparatus includes modules/units that are configured to perform the method according to any one of the first aspect or the possible design of the first aspect. The modules/units may be implemented by hardware, or may be implemented by hardware executing corresponding software.

According to a fourth aspect, a video collection end is further provided. The video collection end includes modules/units that are configured to perform the method according to any one of the second aspect or the possible design of the second aspect. The modules/units may be implemented by hardware, or may be implemented by hardware executing corresponding software.

According to a fifth aspect, a panoramic video generation apparatus is further provided. The apparatus includes: one or more processors; one or more memories; and a communication interface, configured to communicate with another device. The memory stores a computer program. When the computer program is executed by the one or more processors, the panoramic video generation apparatus is enabled to implement, through the communication interface, the method provided in the first aspect.

According to a sixth aspect, a video collection end is further provided. The video collection end includes: one or more processors; one or more memories; and a communication interface, configured to communicate with another device. The memory stores a computer program. When the computer program is executed by the one or more processors, the video collection end is enabled to implement, through the communication interface, the method provided in the second aspect.

According to a seventh aspect, a computer-readable storage medium is further provided. The computer-readable storage medium stores a computer program. When the computer program is run on a panoramic video generation apparatus, the panoramic video generation apparatus may be enabled to implement the method provided in the first aspect.

According to an eighth aspect, a computer-readable storage medium is further provided. The computer-readable storage medium stores a computer program. When the computer program is run on a video collection end, the video collection end may be enabled to implement the method provided in the second aspect.

According to a ninth aspect, a chip is further provided. The chip is configured to read a computer program stored in a memory, to implement the method provided in the first aspect.

According to a tenth aspect, a chip is further provided. The chip is configured to read a computer program stored in a memory, to implement the method provided in the second aspect.

According to an eleventh aspect, a program product is further provided. The program product stores a computer program, and the computer program includes program instructions. When the program instructions are executed by a computer, the computer is enabled to perform the method provided in the first aspect.

According to a twelfth aspect, a program product is further provided. The program product stores a computer program, and the computer program includes program instructions. When the program instructions are executed by a computer, the computer is enabled to perform the method provided in the second aspect.

### BRIEF DESCRIPTION OF DRAWINGS

FIG. 1 is a schematic diagram of an application scenario according to an embodiment of this application;
FIG. 2 is a schematic diagram of another application scenario according to an embodiment of this application;
FIG. 3A and FIG. 3B are a schematic flowchart of a panoramic video generation method according to an embodiment of this application;
FIG. 4 is a schematic diagram of a logical structure of an analysis decision module according to an embodiment of this application;
FIG. 5 is a schematic diagram of a logical structure of an execution processing module according to an embodiment of this application;
FIG. 6 is a schematic diagram of a logical structure of a panoramic video generation apparatus according to an embodiment of this application;
FIG. 7 is a schematic diagram of a structure of a panoramic video generation apparatus according to an embodiment of this application;
FIG. 8 is a schematic diagram of a logical structure of a video collection end according to an embodiment of this application; and
FIG. 9 is a schematic diagram of a structure of a video collection end according to an embodiment of this application.

### DESCRIPTION OF EMBODIMENTS

Technical solutions in embodiments of this application are described in detail below with reference to accompanying drawings of the following embodiments of this application.

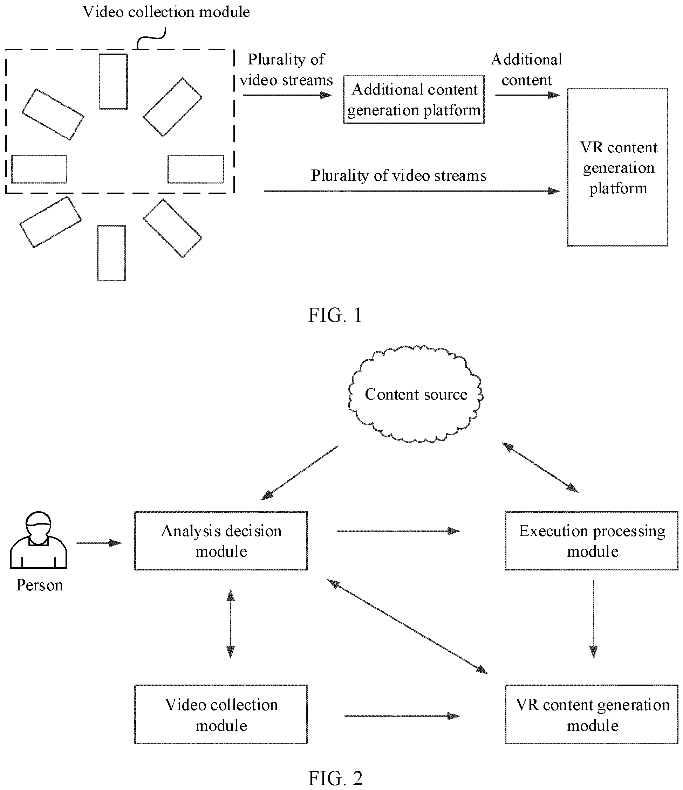

FIG. 1 is a schematic diagram of an application scenario according to an embodiment of this application. As shown in FIG. 1, the scenario includes a video collection module, an additional content generation platform, and a VR content generation platform. The video collection module includes one or more cameras (where eight cameras that are evenly distributed are used as an example in FIG. 1) deployed on a shooting site.

The following describes some terms in embodiments of this application to help a person skilled in the art have a better understanding.
(1) The video collection module (or referred to as a video collection terminal, a video collection end, or the like) in embodiments of this application includes one or more cameras deployed on a shooting site, where the shooting site is, for example, a live concert or a live football match. The cameras deployed at different locations can collect video streams at different angles on the shooting site. The concert is used as an example. Some cameras may collect a stage of the concert, some cameras may collect audience seats, and the like. It should be understood that the camera mentioned herein may be a standard-definition camera, a high-definition camera, or the like. This is not limited in embodiments of this application.
(2) A panoramic video in embodiments of this application, namely, a video obtained by splicing a plurality of video streams by using a video splicing technology, may be referred to as a common panoramic video.
(3) For a panoramic VR video in embodiments of this application, the common panoramic video is converted into a panoramic VR video by using a VR technology, and the panoramic VR video is transmitted to a VR viewing device (for example, a VR helmet or VR glasses). A user views the panoramic VR video by using the VR viewing device. Compared with the common panoramic video, the panoramic VR video provides the user with immersive experience.
   It should be noted that a panoramic video generation method provided in embodiments of this application is applicable to generation of the common panoramic video, and is also applicable to generation of the panoramic VR video. The panoramic VR video is used as an example below for description.
(4) The VR content generation platform (or referred to as a VR content generation module) in embodiments of this application is configured to: splice a plurality of video streams collected by the video collection module into a panoramic VR video, or splice additional content and a plurality of video streams collected by the video collection module into a panoramic VR video, where the attachment content may be a picture, a text, or the like. The VR content generation platform/module may be a computer device such as a server or a terminal, provided that the VR content generation platform/module can implement a function of splicing the plurality of video streams collected by the video collection module into the panoramic VR video.
(5) A third-party content source (or referred to as a third-party content providing platform) in embodiments of this application may provide various advertisements, including a picture, a text, a logo (logo), and the like. In embodiments of this application, the VR content generation platform may add, to the panoramic VR video, an advertisement provided by the third content source.

In the application scenario shown in FIG. 1, each existing camera collects a video stream, and performs uplink transmission of a plurality of video streams to the VR content generation platform. The VR content generation platform splices the plurality of video streams, to obtain a panoramic VR video. Limited by uplink transmission bandwidth, a relatively high compression rate needs to be used for uplink transmission of the plurality of video streams, and the high compression rate causes deterioration of video quality.

Based on the foregoing technical problem, embodiments of this application provide a panoramic video generation method. Terms used in the following embodiments are merely intended to describe particular embodiments, but are not intended to limit this application. The terms "one", "a" and "this" of singular forms used in this specification and the appended claims of this application are also intended to include plural forms, for example, "one or more", unless otherwise specified in the context clearly. It should be further understood that, in embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

The scenario shown in FIG. 1 is used as an example. In the panoramic video generation method provided in embodiments of this application, the eight cameras do not need to all perform uplink transmission of video streams. For example, only five cameras (five cameras in a rectangular box in FIG. 1) perform uplink transmission of video streams collected by the cameras to an additional content providing platform. The five cameras are cameras capable of collecting a region of interest (region of interest, ROI) on a shooting site. Assuming that the shooting site is a live concert, the ROI may be a region in which a stage is located. Assuming that the shooting site is a live football match, the ROI may be a region in which a football field is located. Alternatively, video streams collected by one or more cameras that are configured to collect the ROI on the shooting site and that are in the eight cameras are compressed by using a low compression rate, and uplink transmission is performed on the video streams, to ensure that quality of the video streams corresponding to the region of interest is not seriously deteriorated; and video streams collected by one or more cameras that are configured to collect a non-ROI on the shooting site and that are in the eight cameras are compressed by using a high compression rate, and uplink transmission is performed on the video streams, to save uplink transmission bandwidth.

Further, still as shown in FIG. 1, the additional content generation platform may determine additional content based on a plurality of video streams. The additional content includes, for example, one or more frames of images in a video stream, an image block in a frame of image, or advertisement information. The additional content generation platform sends the additional content to the VR content generation platform. The VR content generation platform may add the additional content to a panoramic VR video.

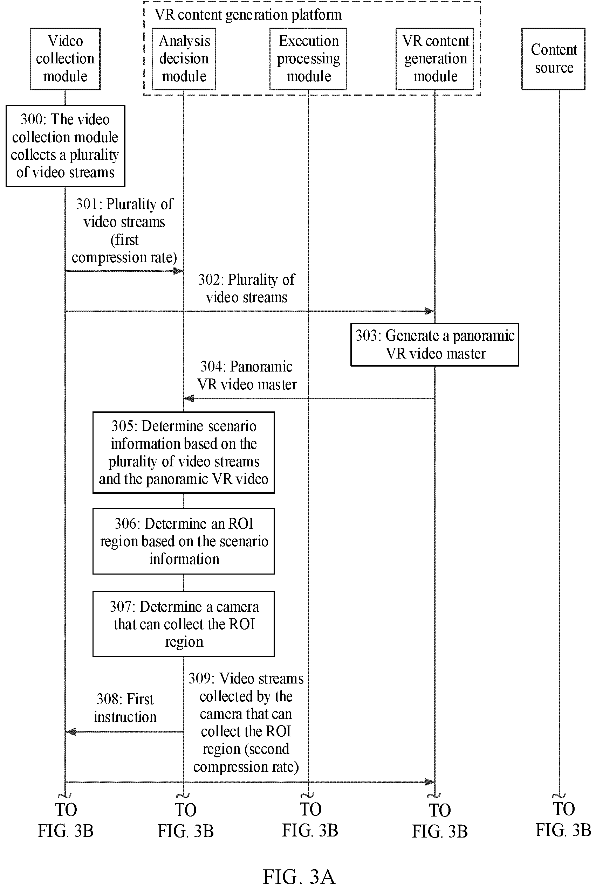

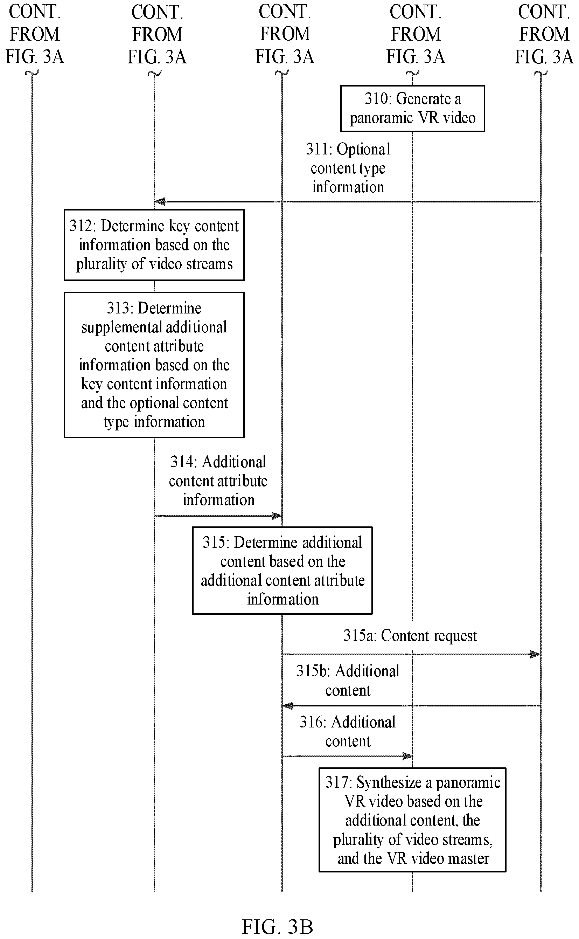

With reference to FIG. 2 and FIG. 3A and FIG. 3B, the following describes an implementation process of the panoramic video generation method provided in embodiments of this application. As shown in FIG. 2, a video collection module, an analysis decision module, an execution processing module, a VR content generation module, and a content source are included. The video collection module may be the video collection module shown in FIG. 1. The analysis decision module, the execution processing module, and the VR content generation module are integrated into the VR content generation platform shown in FIG. 1. The content source is the additional content generation platform shown in FIG. 1. The content source may be a third-party content source, configured to provide additional content such as an advertisement. The third-party content source is used as an example below for description.

It may be understood that the analysis decision module, the execution processing module, and the VR content generation module in FIG. 2 each may be a separate computer device such as a terminal or a server, and the analysis decision module, the execution processing module, and the VR content generation module may communicate with each other; or at least two of the analysis decision module, the execution processing module, or the VR content generation module may be integrated into a separate computer device. This is not limited in embodiments of this application.

It should be noted that after generating a panoramic VR video, the VR content generation module may send the panoramic VR video to a VR viewing device such as a VR helmet or VR glasses, and a user views the panoramic VR video by using the VR viewing device.

FIG. 3A and FIG. 3B are a schematic flowchart of a panoramic video generation method according to an embodiment of this application. As shown in FIG. 3A and FIG. 3B, a process of the method may include the following steps.

300: A video collection module collects a plurality of video streams.

As described above, the video collection module includes one or more cameras deployed at different locations on a shooting site. The cameras collect video streams of different scenarios (or referred to as different angles) on the shooting site.

301: The video collection module sends the plurality of video streams to an analysis decision module.

It may be understood that, after collecting the video streams in 300, each camera may compress the video streams by using a first compression rate, and send the compressed video streams to the analysis decision module. The analysis decision module obtains the video streams through decompression.

302: The video collection module sends the plurality of video streams to a VR content generation module.

It should be understood that 301 and 302 may be simultaneously performed, or may not be simultaneously performed.

It may be understood that, after collecting the video stream in 302, each camera may compress the video stream by using the first compression rate, and send the compressed video stream to the VR content generation module. The VR content generation module obtains the video stream through decompression.

303: The VR content generation module generates a panoramic VR video master based on the plurality of video streams.

Assuming that the video collection module includes eight cameras, and each camera collects one video stream, the VR content generation module may splice the eight video streams to generate the panoramic VR video master. That is, the panoramic VR video master is a video formed by splicing the video streams collected by all the cameras.

304: The VR content generation module sends the panoramic VR video master to the analysis decision module.

It should be understood that the panoramic VR video master includes global information of the shooting site. For example, the shooting site includes a stage, audience seats, and distribution statuses of the stage and the audience seats.

305: The analysis decision module identifies scenario information based on the plurality of videos received in 301 and the panoramic VR video master received in 304.

It should be understood that, in 301, the analysis decision module receives the plurality of video streams sent by the video collection module, and each video stream may reflect partial information of the shooting site. For example, a video stream collected by a No. 1 camera may reflect detailed information of a shooting range of the No. 1 camera. The panoramic VR video master that is sent by the VR content generation module and that is received by the analysis decision module in 304 may reflect global information of the shooting site. Therefore, in 305, the analysis decision module may determine the scenario information based on the partial information and the global information. The scenario information may be a concert scenario, a ball match scenario, or the like.

306: The analysis decision module determines an ROI region based on the scenario information.

It should be noted that the ROI region may be a preset shooting region on the shooting site. For example, it is assumed that in 305, the analysis decision module determines that the scenario information is the concert scenario. In this case, the ROI region is a region in which the stage is located. It is assumed that in 305, the analysis decision module determines that the scenario information is the ball match scenario. In this case, the ROI region is a region in which a football field is located. Alternatively, the ROI region is a region set by a user. For example, the user selects a region from the panoramic video master. In this case, the region is the ROI region.

It should be noted that a scenario of the shooting site can be identified by using a relatively small quantity of images. Therefore, after collecting the video streams in 300, the video collection module may separately send the first several frames of images (for example, the 1^{st} to the 10^{th} frames of images) in the video streams to the analysis decision module and the VR content generation module. In other words, a quantity of frames of images included in the video streams transmitted in 301 and 302 may be less than a preset quantity of frames (for example, 10 frames). In this way, uplink transmission of the video streams can be easily implemented.

307: The analysis decision module determines one or more cameras (where for ease of description, the one or more cameras are referred to as first cameras) that can collect the ROI region.

It may be understood that the cameras deployed on the shooting site are located at different locations, and some of the cameras may collect video streams in the ROI region. Therefore, after determining the ROI region, the analysis decision module may determine the one or more cameras that can collect the ROI region. Specifically, a manner of determining, by the analysis decision module, the one or more cameras that can collect the ROI region may include: When deploying the cameras, a camera deployment person may record a number of each camera and enter the number in the analysis decision module. Therefore, the analysis decision module stores the number of each camera. In 301, the analysis decision module obtains the video stream collected by each camera. Therefore, the analysis decision module may determine a video collection range of each camera based on the video stream collected by the camera, and determine the one or more cameras that are within the video collection ranges and that include all or a part of the ROI region.

308: The analysis decision module sends a first instruction to the first camera that can collect the ROI region, where the first instruction is used to indicate the first camera to compress a video stream by using a second compression rate, and perform uplink transmission of the video stream to the VR content generation module, where the second compression rate is less than the first compression rate.

Specific values of the first compression rate and the second compression rate may be set by default, or may be user-defined.

It should be noted that 308 may be implemented in a plurality of manners, for example, the following manner 1 or manner 2.

Manner 1: The analysis decision module may communicate with each camera in the video collection module. In this case, after determining the one or more cameras that can collect the ROI region, the analysis decision module separately sends the first instruction to the one or more cameras.

Manner 2: The analysis decision module cannot communicate with each camera in the video collection module. In this case, after determining the one or more cameras that can collect the ROI region, the analysis decision module may send the first instruction to a device for managing and controlling the cameras, where the first instruction may carry one or more numbers of the one or more cameras. The device for managing and controlling the cameras forwards the first instruction to the one or more cameras based on the numbers.

309: The first camera compresses collected video streams by using the second compression rate, and performs uplink transmission of the compressed video streams to the VR content generation module.

It should be noted that, after the analysis decision module determines the ROI region, the first camera may compress the video streams by using a relatively low compression rate, to ensure video quality as much as possible.

309 may include a plurality of implementations, for example, the following manner A or manner B.

Manner A: In 309, only at least one first camera performs uplink transmission of the video streams by using the second compression rate, and another camera does not need to perform uplink transmission of a video stream. For example, the another camera stops collecting the video stream, stops uplink transmission after collecting the video stream, or intermittently and periodically collects and performs uplink transmission of the video stream. It may be understood that the another camera is a camera other than the first camera.

In the manner A, the another camera does not perform uplink transmission of the video stream. Therefore, in a case of limited uplink transmission bandwidth, the first camera configured to collect the ROI region may perform uplink transmission at a relatively low compression rate, to ensure video quality corresponding to the ROI region.

Manner B: In 309, the first camera collects the video streams, compresses the video streams by using the second compression rate, and performs uplink transmission; and another camera also collects a video stream, compresses the video stream by using a compression rate higher than the second compression rate (for example, continuing using the first compression rate, or certainly using another compression rate higher than the second compression rate), and performs uplink transmission.

For example, the shooting site is a live concert, eight cameras are deployed, and the analysis decision module determines that numbers of the cameras that can collect the ROI region are 1 to 5. In this case, the five cameras numbered from 1 to 5 performs uplink transmission of video streams by using a relatively low compression rate, and three cameras numbered from 6 to 8 performs uplink transmission of video streams by using a relatively high compression rate.

In the manner B, the another camera performs uplink transmission of the video stream by using the relatively high compression rate. Therefore, in a case of limited uplink transmission bandwidth, the first camera configured to collect the ROI region may perform uplink transmission at a relatively low compression rate, to ensure video stream quality corresponding to the ROI region.

310: The VR content generation platform generates a panoramic VR video.

Case 1: 309 is implemented in the manner A. That is, not all the cameras perform uplink transmission of video streams in 309.

In this case, in 310, the VR content generation platform may generate a global VR video based on the panoramic VR video master obtained in 304. Specifically, a total of eight cameras are used as an example. The panoramic VR video master obtained in 304 is obtained by splicing the video streams collected by all the cameras. Therefore, the panoramic VR video master includes eight regions. A region 1 corresponds to a video stream collected by the camera 1, a region 2 corresponds to a video stream collected by the camera 2, and so on. It is assumed that in 309, only the cameras numbered 1 to 5 perform uplink transmission of the video streams. In this case, the VR content generation module may delete a region 6 to a region 8 that correspond to the cameras numbered 6 to 8 and that are in the panoramic VR video master, fill the region 1 to a region 5 in the panoramic VR video master with the video streams collected by the cameras numbered 1 to 5, and splice the video streams to obtain the panoramic VR video.

Case 2: 309 is implemented in the manner B. That is, all the cameras perform uplink transmission of video streams in 309.

In this case, the VR content generation platform may fill a corresponding region in the panoramic VR video master with the video stream collected by each camera.

The following embodiment describes a process of adding additional content to the panoramic VR video.

311: The analysis decision module receives optional content type information sent by a third-party content source.

For example, the optional content type information includes type label information of content that can be provided by the third-party content source. Assuming that the third-party content source includes two types: a concert advertisement and a ball match advertisement, and each type may further include a subtype. For example, the concert advertisement may specifically include ticket purchase (for example, a purchase link); and the ball match advertisement specifically includes advertisements related to a football match, a basketball match, and a table tennis match, for example, a football brand advertisement and a clothing advertisement.

The third-party content source sends the optional content type information to the analysis decision module, so that the analysis decision module determines which types of advertisements exist in the third-party content source currently.

It may be understood that the third-party content source may actively send the optional content type information to the analysis decision module, or the analysis decision module may send a request to the third content source, and the third-party content source delivers the optional content type information to the analysis decision module based on the request.

312: The analysis decision module determines key content information based on the plurality of video streams, where the key content information is information about an object included in the plurality of video streams, for example, a player included in a ball match or a singer included in a concert.

Optionally, before 312, the analysis decision module may further determine a mode, for example, a mode 1 or a mode 0, where the mode 1 is used to indicate a mode in which the additional content is added, and the mode 0 is used to indicate a mode in which the content does not need to be added. If the analysis decision module selects the mode 0, 312 to 317 do not need to be performed. The mode 1 or the mode 0 set by the analysis decision module may be determined by the user. For example, the mode 0 is set by default, and may be adjusted to the mode 1 under triggering of the user.

313: The analysis decision module determines additional content attribute information based on the key content information and the optional content type information, where the additional content attribute information includes attributes of a form and content, the form includes but is not limited to a text, an image, a video, and the like, and the content includes but is not limited to an advertisement, an accompanying product, movie information playback, and the like that are related to the key content information.

Manner 1: As described above, the optional content type information includes a label/directory of a content type that can be provided by the third-party content source. After determining the key content information, the analysis decision module may search the optional content type information for a content type related to the key content information, and determine the additional content based on a found content type if finding the content type. In the manner 1, the additional content may be content provided by the third-party content source.

For example, the optional content information includes ticket information of Faye Wong's concert. When determining that the key content information in the video streams includes Faye Wong, the analysis decision module may determine that the additional content is the ticket information of Faye Wong's concert, for example, a ticket link, and a time, a place, and the like of the concert.

Manner 2: After determining the key content information, the analysis decision module may determine the additional content related to the key content information in the plurality of video streams. For example, the video streams are a video of a football match, and the analysis decision module identifies that the key content information is a player. In this case, one or more frames of images of a goal of the player in the video streams are used as the additional content. In the manner 2, the additional content is one or more frames of images in the plurality of videos, or an image block in a frame of image, or the like.

Manner 3: The additional content is still set by the user. For example, the user enters the attachment content into the analysis decision module based on a requirement of the user.

The foregoing manner 1 to manner 3 may be used in combination. For example, when the content type related to the key content information is not searched for in the optional content type information in the manner 1, the manner 2 may be used.

314: The analysis decision module sends the additional content attribute information to an execution processing module.

315: The execution processing module determines the additional content based on the additional content attribute information.

Assuming that 313 is implemented in the manner 1, the execution processing module in 315 may be implemented by performing 315a and 315b.

315a: The execution processing module sends a content request to the third-party content source, where the content request is used to request the additional content from the third-party content. For example, the content request carries the additional content attribute information, or carries the key content information.

315b: The execution processing module receives the additional content sent by the third-party content source.

As described above, after determining the additional content in 313, the analysis decision module may request the additional content from the third-party content source by using the execution processing module.

It should be noted that after 315b, the execution processing module may further convert a form of the additional content sent by the third-party content source, to convert the additional content into content that is suitable for being added to the panoramic VR video. For example, if the additional content sent by the third-party content source is a two-dimensional image, the execution processing module may perform a series of processing processes such as scale transformation, projection, and filling on the image, to process the image into an image that is suitable for being added to the panoramic VR video.

In the manner 2, the additional content is one or more frames of images in the video streams. Therefore, the execution processing module may also process the attachment content into additional content that is suitable for being added to the panoramic VR video.

316: The execution processing module sends the additional content to the VR content generation module.

317: The VR content generation module adds the additional content to the panoramic VR video generated in 310.

It should be noted that, in an existing mechanism, a process of obtaining the panoramic VR video to which the additional content is added may include video collection, video processing (for example, a process of splicing the plurality of video streams), encoding, transmission, decryption on a playback end, playback, and the like. In the existing mechanism, the additional content is added in an encoding process, that is, the additional content is added to a bitstream. However, the additional content cannot be determined based on video content in the encoding process. However, in this embodiment of this application, the VR content generation module may perform a process of adding the additional content during video processing, and determine, in the process, the additional content (namely, 312 to 316) based on the video content.

As described above, the video collection module, the analysis decision module, the execution processing module, and the VR content generation module in FIG. 2 may be computer devices such as servers or terminals that are independent of each other. The following separately describes structures of the analysis decision module and the execution processing module.

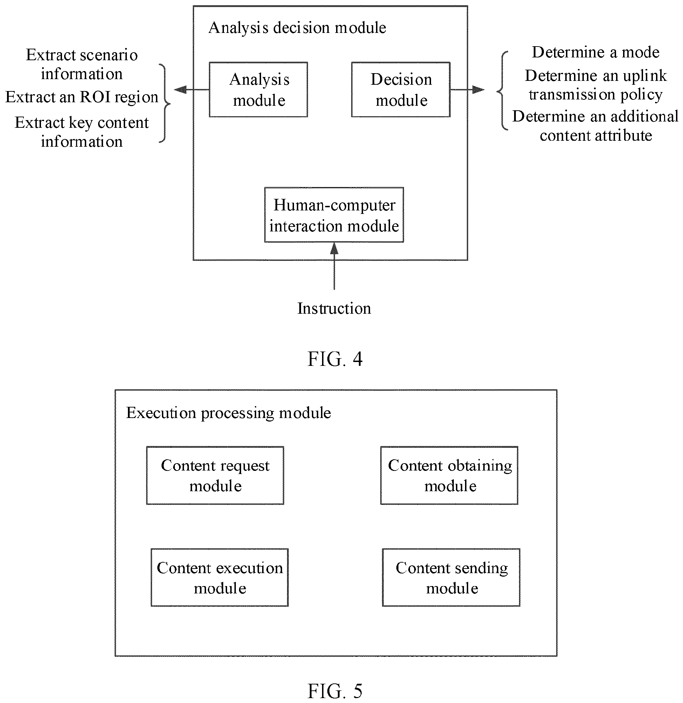

FIG. 4 is a schematic diagram of a structure of an analysis decision module according to an embodiment of this application. As shown in FIG. 4, the analysis decision module includes an analysis module, a decision module, and a human-computer interaction module. The analysis module may be configured to: extract an ROI region, extract key content, extract scenario information, and the like. For a process of extracting the scenario information, refer to 305 in the embodiment shown in FIG. 3A. For a process of extracting the ROI region, refer to 306 in the embodiment shown in FIG. 3A. For a process of extracting the key content information, refer to 312 in the embodiment shown in FIG. 3B.

The decision module may be configured to determine a compression rate for uplink transmission, additional content attribute information, and the like. For a process of determining the compression rate for the uplink transmission, refer to the related descriptions of 308 in the embodiment shown in FIG. 3A. For a process of determining the additional content attribute information, refer to 313 in the embodiment shown in FIG. 3B. For a process of determining a mode, refer to the related descriptions of 312 in the embodiment shown in FIG. 3B.

The human-computer interaction module may be configured to receive instructions entered by a user, where the instructions may be used to determine a compression rate, for example, the foregoing first compression rate or second compression rate; or is configured to determine a mode, for example, a mode 0 or a mode 1.

FIG. 5 is a schematic diagram of a structure of an execution processing module. As shown in FIG. 5, the execution processing module includes a content request module, a content obtaining module, a content execution module, and a content sending module. The content request module is configured to perform 315a in the embodiment shown in FIG. 3B. The content obtaining module is configured to perform 315b in the embodiment shown in FIG. 3B. The content execution module is configured to perform the process of processing the additional content to obtain the additional content that is suitable for being added to the panoramic VR video in the embodiment shown in FIG. 3A and FIG. 3B. The content sending module is configured to perform 316 in the embodiment shown in FIG. 3B. The content request module and the content sending module may be a same module, configured to send data. The content obtaining module may be configured to receive data.

The foregoing describes the panoramic video generation method provided in embodiments of this application, and the following describes a related apparatus provided in embodiments of this application.

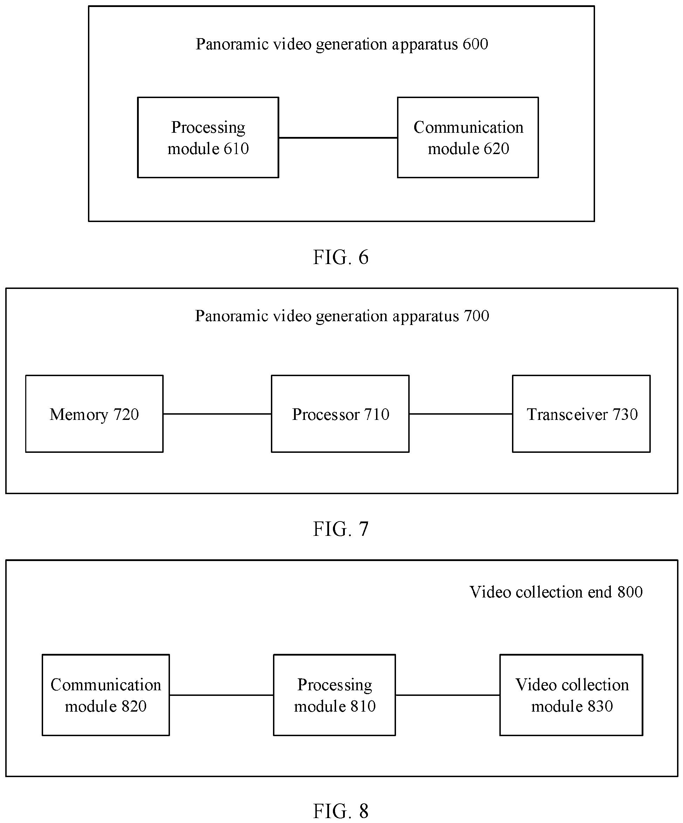

FIG. 6 is a schematic block diagram of a panoramic video generation apparatus 600 according to an embodiment of this application. The panoramic video generation apparatus 600 may be the foregoing VR content generation platform. The panoramic video generation apparatus 600 includes a processing module 610 and a communication module 620. It should be understood that the processing module 610 in this embodiment of this application may be implemented by a processor or a processor-related circuit component. Optionally, the communication module 620 may include a transceiver module, and may specifically include a receiving module and a sending module. The receiving module is configured to receive data, and the sending module is configured to send data. The transceiver module may be implemented by a transceiver or a transceiver-related circuit component.

The communication module 620 is configured to receive a first video stream that is sent by each of a plurality of video collection ends deployed on a shooting site and that is compressed by using a first compression rate. The processing module 610 is configured to: decompress, based on the first compression rate, the first video stream sent by each video collection end, and determine a region of interest on the shooting site based on the plurality of decompressed first video streams. The communication module 620 is further configured to separately send a first instruction to at least one first video collection end that is capable of collecting the region of interest in the plurality of video collection ends, where the first instruction is used to indicate the first video collection end to compress collected video streams by using a second compression rate, and the second compression rate is less than the first compression rate. The communication module 620 is further configured to receive second video streams that are separately sent by the at least one first video collection end and that are compressed by using the second compression rate. The processing module 610 is further configured to: decompress, based on the second compression rate, the second video streams separately sent by the at least one first video collection end, and generate a first panoramic video based on a plurality of decompressed second video streams.

Optionally, the communication module 620 may further receive second video streams that are compressed by using the first compression rate and that are separately sent by at least one second video collection end other than the at least one first video collection end in the plurality of video collection ends. The processing module 610 may specifically decompress, based on the first compression rate, the second video streams separately sent by the at least one second video collection end, decompress, based on the second compression rate, the second video streams separately sent by the at least one first video collection end, and generate the first panoramic video based on the plurality of decompressed second video streams.

Optionally, the communication module 620 may further send a second instruction to another video collection end that is in the plurality of video collection ends and that is other than at least one first video collection capable of collecting the region of interest, where the second instruction is used to indicate the another video collection end to stop collecting a video stream or stop sending a video stream to the platform.

For example, the region of interest may be but is not limited to a preset shooting region on the shooting site or a region selected by a user from the plurality of decompressed first video streams.

The processing module 610 may further identify key content in the plurality of decompressed second video streams, where the key content may include one or more objects in the second video streams; determine, based on the key content, additional content related to the key content; and add the additional content to the first panoramic video, to obtain a second panoramic video. For example, the additional content may be one or more frames of images that are related to the key content and that are in the plurality of decompressed second video streams, or content that is associated with the key content and that is outside the plurality of decompressed second video streams.

The communication module 620 may further send a content request to a third-party content source, where the content request carries attribute information used to describe the additional content or carries the key content, and the attribute information of the additional content is determined based on the key content; and receive the additional content sent by the third-party content source.

As shown in FIG. 7, an embodiment of this application further provides a panoramic video generation apparatus 700. The panoramic video generation apparatus 700 may be the foregoing VR content generation platform. The panoramic video generation apparatus 700 includes a processor 710, a memory 720, and a transceiver 730. The memory 720 stores instructions or a program. The processor 710 is configured to execute the instructions or the program stored in the memory 720. When the instructions or the program stored in the memory 720 is executed, the processor 710 is configured to perform an operation performed by the processing module 610 in the foregoing embodiment, and the transceiver 730 is configured to perform an operation performed by the communication module 620 in the foregoing embodiment.

It should be understood that the panoramic video generation apparatus 600 or the panoramic video generation apparatus 700 according to embodiments of this application may implement a function of the VR content generation platform in the panoramic video generation method shown in FIG. 3A and FIG. 3B in embodiments of this application. For example, operations and/or functions of modules in the panoramic video generation apparatus 600 or the panoramic video generation apparatus 700 may implement corresponding procedures of the VR content generation platform shown in FIG. 3A and FIG. 3B. For brevity, details are not described herein again.

FIG. 8 is a schematic block diagram of a video collection end 800 according to an embodiment of this application. The video collection end 800 may be the foregoing video collection module. For example, when the video collection module includes eight cameras, the video collection end 800 may be one of the cameras. The video collection end 800 includes a processing module 810, a communication module 820, and a video collection module 830. It should be understood that the processing module 810 in this embodiment of this application may be implemented by a processor or a processor-related circuit component. Optionally, the communication module 820 may include a transceiver module, and may specifically include a receiving module and a sending module. The receiving module is configured to receive data, and the sending module is configured to send data. The communication module may be implemented by a transceiver or a transceiver-related circuit component.

It may be learned from the descriptions of the foregoing method embodiments that, in the eight video collection ends shown in FIG. 1, different video collection ends may complete different work. For example, some video collection ends first compress collected video streams by using a first compression rate, and upload the video streams. Then, based on an indication of a VR content generation platform, the video collection ends compress collected video streams by using a second compression rate, and upload the video streams. The first compression rate is greater than the second compression rate. A video collection end that completes this working principle is usually a collection end that can collect a region of interest.

For another example, some video collection ends first compress collected video streams by using the first compression rate, and upload the video streams. Then, based on an indication of the VR content generation platform, the video collection ends continue compressing collected video streams by using the first compression rate, and upload the video streams; or compresses collected video streams by using another compression rate greater than the second compression rate, and uploads the video streams; or stop collecting a video stream; or collecting video streams but do not upload the video streams to the VR content generation platform. A video collection end that completes this working principle is usually a collection end that cannot collect a region of interest.

Based on this, the video collection module 830 is configured to collect a first video stream. The communication module 820 is configured to receive a first instruction, where the first instruction is used to indicate the video collection end to compress the first video stream by using the first compression rate. The processing module 810 is configured to compress the first video stream by using the first compression rate. The communication module 820 is further configured to send the compressed first video stream to a platform configured to generate a panoramic video.

Next, in a case, when the communication module 820 receives a second instruction that is used to indicate the video collection end to compress a video stream by using the second compression rate, the processing module 810 is further configured to compress, by using the second compression rate, a second video stream collected by the video collection end, and the communication module 820 is further configured to send the second video stream compressed by using the second compression rate to the platform. In another case, when the communication module 820 receives a third instruction that is used to indicate the video collection end to continue compressing a video stream by using the first compression rate, the processing module 810 is further configured to continue compressing, by using the first compression rate, the second video stream collected by the video collection module, and the communication module 820 is further configured to send the second video stream compressed by using the first compression rate to the platform. Alternatively, when the communication module 820 receives a fourth instruction used to indicate the video collection end to stop collecting a video stream, the processing module 810 controls the video collection module 830 to stop collecting the video stream. Alternatively, when the communication module 820 receives a fifth instruction used to indicate the video collection end to stop transmission of a video stream, the processing module 810 controls the communication module 820 to stop sending the video stream to the platform.

Optionally, a quantity of frames of images included in the first video stream collected by the video collection module 830 may be less than a threshold.

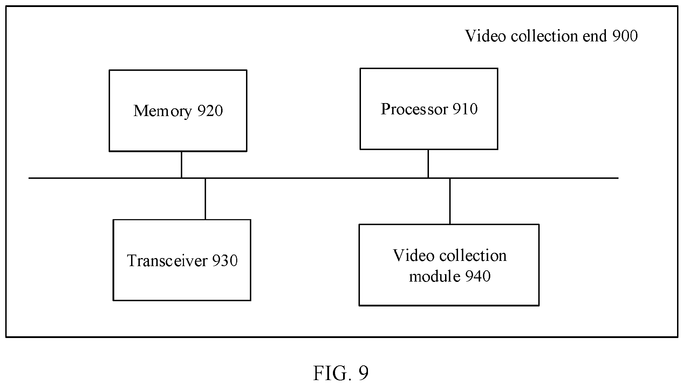

As shown in FIG. 9, an embodiment of this application further provides a video collection end 900. The video collection end 900 may be the foregoing video collection module. For example, when the video collection module includes eight cameras, the video collection end 900 may be one of the cameras. The video collection end 900 includes a processor 910, a memory 920, a transceiver 930, and a video collection module 940. The memory 920 stores instructions or a program. The processor 910 is configured to execute the instructions or the program stored in the memory 920. When the instructions or the program stored in the memory 920 is executed, the processor 910 is configured to perform an operation performed by the processing module 810 in the foregoing embodiment, and the transceiver 930 is configured to perform an operation performed by the communication module 820 in the foregoing embodiment. The video collection module 940 performs video collection under control of the processor 910.

It should be understood that the video collection end 800 or the video collection end 900 according to embodiments of this application may implement a function of the video collection module in the panoramic video generation method shown in FIG. 3A and FIG. 3B in embodiments of this application. For example, operations and/or functions of modules in the video collection end 800 or the video collection end 900 may implement corresponding procedures performed by the video collection module in the process shown in FIG. 3A and FIG. 3B. For brevity, details are not described herein again.

It should be understood that, the processor mentioned in embodiments of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through examples rather than limitative descriptions, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, discrete gate, transistor logic device, or discrete hardware component, the memory (storage module) is integrated into the processor.

It should be noted that the memory described in this specification is intended to include, but is not limited to, these memories and any memory of another proper type.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A panoramic video generation method, applied to a platform capable of generating a panoramic video, and comprising:
receiving a first video stream that is compressed by using a first compression rate and that is sent by each of a plurality of video collection ends deployed on a shooting site;
decompressing, based on the first compression rate, the first video stream sent by each video collection end, and determining a region of interest on the shooting site based on the plurality of decompressed first video streams;
separately sending a first instruction to at least one first video collection end that is capable of collecting the region of interest in the plurality of video collection ends, wherein the first instruction is used to indicate the first video collection end to compress collected video streams by using a second compression rate, and the second compression rate is less than the first compression rate;
receiving second video streams that are separately sent by the at least one first video collection end and that are compressed by using the second compression rate; and
decompressing, based on the second compression rate, the second video streams separately sent by the at least one first video collection end, and generating a first panoramic video based on a plurality of decompressed second video streams.

2. The method according to claim 1, wherein the method further comprises:
receiving second video streams that are compressed by using the first compression rate and that are separately sent by at least one second video collection end other than the at least one first video collection end in the plurality of video collection ends; and
the decompressing, based on the second compression rate, the second video streams separately sent by the at least one first video collection end, and generating a first panoramic video based on a plurality of decompressed second video streams comprises:
decompressing, based on the first compression rate, the second video streams separately sent by the at least one second video collection end, decompressing, based on the second compression rate, the second video streams separately sent by the at least one first video collection end, and generating the first panoramic video based on the plurality of decompressed second video streams.

3. The method according to claim 1, wherein after the determining a region of interest on the shooting site based on the plurality of decompressed first video streams, the method further comprises:
sending a second instruction to another video collection end that is in the plurality of video collection ends and that is other than at least one first video collection capable of collecting the region of interest, wherein the second instruction is used to indicate the another video collection end to stop collecting a video stream or stop sending a video stream to the platform.

4. The method according to any one of claims 1 to 3, wherein the region of interest is a preset shooting region on the shooting site or a region selected by a user from the plurality of decompressed first video streams.

5. The method according to any one of claims 1 to 4, wherein the method further comprises:
identifying key content in the plurality of decompressed second video streams, wherein the key content comprises one or more objects in the second video streams;
determining, based on the key content, additional content related to the key content; and
adding the additional content to the first panoramic video, to obtain a second panoramic video.

6. The method according to claim 5, wherein the additional content is one or more frames of images that are related to the key content and that are in the plurality of decompressed second video streams, or content that is associated with the key content and that is outside the plurality of decompressed second video streams.

7. The method according to claim 5 or 6, wherein the determining, based on the key content, additional content related to the key content comprises:
sending a content request to a third-party content source, wherein the content request carries attribute information used to describe the additional content or carries the key content, and the attribute information of the additional content is determined based on the key content; and
receiving the additional content sent by the third-party content source.

8. A video collection method, comprising:
receiving, by a video collection end deployed on a shooting site, a first instruction, wherein the first instruction is used to indicate the video collection end to compress a collected video stream by using a first compression rate;
collecting, by the video collection end, a first video stream, and compressing the first video stream by using the first compression rate;
sending, by the video collection end, the compressed first video stream to a platform configured to generate a panoramic video;
receiving, by the video collection end, a second instruction sent by the platform, wherein the second instruction is used to indicate the video collection end to compress the collected video stream by using a second compression rate, and the second compression rate is less than the first compression rate;
collecting, by the video collection end, a second video stream, and compressing the second video stream by using the second compression rate; and
sending, by the video collection end, the compressed second video stream to the platform.

9. A video collection method, comprising:
receiving, by a video collection end deployed on a shooting site, a first instruction, wherein the first instruction is used to indicate the video collection end to compress a collected video stream by using a first compression rate;
collecting, by the video collection end, a first video stream, and compressing the first video stream by using the first compression rate;
sending, by the video collection end, the compressed first video stream to a platform configured to generate a panoramic video;
receiving, by the video collection end, a third instruction sent by the platform, wherein the third instruction is used to indicate the video collection end to continue compressing the collected video stream by using the first compression rate;
collecting, by the video collection end, a second video stream, and compressing the second video stream by using the first compression rate; and
sending, by the video collection end, the compressed second video stream to the platform.

10. A video collection method, comprising:
receiving, by a video collection end deployed on a shooting site, a first instruction, wherein the first instruction is used to indicate the video collection end to compress a collected video stream by using a first compression rate;
collecting, by the video collection end, a first video stream, and compressing the first video stream by using the first compression rate;
sending, by the video collection end, the compressed first video stream to a platform configured to generate a panoramic video;
receiving, by the video collection end, a fourth instruction sent by the platform, wherein the fourth instruction is used to indicate the video collection end to stop collecting a video stream or stop sending a video stream to the platform; and
stopping, by the video collection end based on the fourth instruction, collecting the video stream or stopping sending the video stream to the platform.

11. The method according to any one of claims 8 to 10, wherein a quantity of frames of images comprised in the first video stream collected by the video collection end is less than a threshold.

12. A panoramic video generation apparatus, comprising:
a communication module, configured to receive a first video stream that is compressed by using a first compression rate and that is sent by each of a plurality of video collection ends deployed on a shooting site; and
a processing module, configured to: decompress, based on the first compression rate, the first video stream sent by each video collection end, and determine a region of interest on the shooting site based on the plurality of decompressed first video streams, wherein
the communication module is further configured to separately send a first instruction to at least one first video collection end that is capable of collecting the region of interest in the plurality of video collection ends, wherein the first instruction is used to indicate the first video collection end to compress collected video streams by using a second compression rate, and the second compression rate is less than the first compression rate;
the communication module is further configured to receive second video streams that are separately sent by the at least one first video collection end and that are compressed by using the second compression rate; and
the processing module is further configured to: decompress, based on the second compression rate, the second video streams separately sent by the at least one first video collection end, and generate a first panoramic video based on a plurality of decompressed second video streams.

13. The apparatus according to claim 12, wherein the communication module is further configured to receive second video streams that are compressed by using the first compression rate and that are separately sent by at least one second video collection end other than the at least one first video collection end in the plurality of video collection ends; and
when the processing module is configured to: decompress, based on the second compression rate, the second video streams separately sent by the at least one first video collection end, and generate the first panoramic video based on the plurality of decompressed second video streams, the processing module is specifically configured to:
decompress, based on the first compression rate, the second video streams separately sent by the at least one second video collection end, decompress, based on the second compression rate, the second video streams separately sent by the at least one first video collection end, and generate the first panoramic video based on the plurality of decompressed second video streams.

14. The apparatus according to claim 12, wherein the communication module is further configured to:
send a second instruction to another video collection end that is in the plurality of video collection ends and that is other than at least one first video collection capable of collecting the region of interest, wherein the second instruction is used to indicate the another video collection end to stop collecting a video stream or stop sending a video stream to the platform.

15. The apparatus according to any one of claims 12 to 14, wherein the region of interest is a preset shooting region on the shooting site or a region selected by a user from the plurality of decompressed first video streams.

16. The apparatus according to any one of claims 12 to 15, wherein the processing module is further configured to:
identify key content in the plurality of decompressed second video streams, wherein the key content comprises one or more objects in the second video streams;
determine, based on the key content, additional content related to the key content; and
add the additional content to the first panoramic video, to obtain a second panoramic video.

17. The apparatus according to claim 16, wherein the additional content is one or more frames of images that are related to the key content and that are in the plurality of decompressed second video streams, or content that is associated with the key content and that is outside the plurality of decompressed second video streams.

18. The apparatus according to claim 16 or 17, wherein the communication module is further configured to:
send a content request to a third-party content source, wherein the content request carries attribute information used to describe the additional content or carries the key content, and the attribute information of the additional content is determined based on the key content; and
receive the additional content sent by the third-party content source.

19. A video collection end, comprising:
a video collection module, configured to collect a first video stream;
a communication module, configured to receive a first instruction, wherein the first instruction is used to indicate the video collection end to compress the first video stream by using a first compression rate; and
a processing module, configured to compress the first video stream by using the first compression rate, wherein
the communication module is further configured to send the compressed first video stream to a platform configured to generate a panoramic video; and
the processing module is further configured to: when the communication module receives a second instruction used to indicate the video collection end to compress a video stream by using a second compression rate, and compress, by using the second compression rate, a second video stream collected by the video collection module; and the communication module is further configured to send the compressed second video stream to the platform;
the processing module is further configured to: when the communication module receives a third instruction used to indicate the video collection end to continue compressing a video stream by using the first compression rate, continue compressing, by using the first compression rate, a second video stream collected by the video collection module; and the communication module is further configured to send the compressed second video stream to the platform;
the processing module is further configured to: when the communication module receives a fourth instruction used to indicate the video collection end to stop collecting a video stream, control the video collection module to stop collecting the video stream; or
the processing module is further configured to: when the communication module receives a fifth instruction used to indicate the video collection end to stop transmission of a video stream, control the communication module to stop sending the video stream to the platform.

20. The video collection end according to claim 19, wherein a quantity of frames of images comprised in the first video stream collected by the video collection module is less than a threshold.

21. A panoramic video generation apparatus, comprising:
one or more processors;
one or more memories; and
a communication interface, configured to communicate with another device, wherein
the memory stores a computer program, and when the computer program is executed by the one or more processors, the panoramic video generation apparatus is enabled to implement the method according to any one of claims 1 to 7 through the communication interface.

22. A video collection end, comprising:
one or more processors;
one or more memories; and
a communication interface, configured to communicate with another device, wherein
the memory stores a computer program, and when the computer program is executed by the one or more processors, the video collection end is enabled to implement the method according to any one of claims 8 to 11 through the communication interface.

23. A computer-readable storage medium, storing a computer program, wherein when the computer program is run on a panoramic video generation apparatus, the panoramic video generation apparatus is enabled to perform the method according to any one of claims 1 to 7.

24. A computer-readable storage medium, storing a computer program, wherein when the computer program is run on a video collection end, the video collection end is enabled to perform the method according to any one of claims 8 to 11.

25. A chip, wherein the chip is configured to read a computer program stored in a memory, to implement the method according to any one of claims 1 to 7.

26. A chip, wherein the chip is configured to read a computer program stored in a memory, to implement the method according to any one of claims 8 to 11.

27. A computer program, comprising instructions, wherein when the instructions are run on a computer, the computer is enabled to implement the method according to any one of claims 1 to 7.

28. A computer program, comprising instructions, wherein when the instructions are run on a computer, the computer is enabled to implement the method according to any one of claims 8 to 11.
